# EUROPEAN PATENT APPLICATION

(11) **EP 4 261 247 A1**
(43) Date of publication of application: **18.10.2023**
(21) Application number: 23165639.8
(22) Date of filing: 30.03.2023
(51) Int. Cl.: C08J 7/046, B32B 27/32, B32B 27/40, B32B 33/00, B29C 71/02, C08J 3/28, C08J 7/12, C08J 7/18, C09D 175/04, C09D 175/14, C09D 175/16

(54) **HIGH ABRASION RESISTANCE COMPOSITE STRUCTURE, ITS PREPARATION AND USE**

(30) Priority: 12.04.2022 PT 2022001588; 21.03.2023 PT 2023118563
(71) Applicant: TMG - Tecidos Plastificados e Outros Revestimentos para a Indústria Automóvel, S.A., 4770-583 São Cosme do Vale (PT)
(72) Inventor: SANTOS SILVA, CAROLINA LEBRE, 4770-583 SÃO COSME VALE (PT); DA SILVA RIBEIRO, FILIPE MIGUEL, 4770-583 SÃO COSME VALE (PT); CARVALHO DA SILVA, LUÍS FILIPE, 4770-583 SÃO COSME VALE (PT); DA SILVA MARQUES, SARA PATRICIA, 4770-583 SÃO COSME VALE (PT)
(74) Representative: Strehl Schübel-Hopf & Partner

(57) **Abstract**

A composite structure containing a finishing layer provided on a substrate layer, wherein the finishing layer is based on a cured polymer and is obtainable by a method that comprises irradiation curing a finishing lacquer that is applied on the substrate layer and contains an irradiation-curable compound to obtain the cured polymer; a method of preparing the composite structure; and the use of the composite structure for the interior of vehicles.

## Description

### Field of the invention

The present invention relates to a composite structure having high abrasion resistance, a method of preparing the composite structure and the use of the composite structure, in particular as an artificial leather in touch interface applications in vehicles.

### Background art

EP 3 575 121 A1 discloses a composite structure that comprises a translucent layer, an opaque layer containing a translucent area, and a touch sensor, and that is used for hidden-until-lit applications. The translucent layer may be coated with a translucent lacquer layer.

EP 3 723 981 A1 discloses a component with a decorative surface and with signalling or operating elements arranged in the surface, wherein the component comprises a component carrier as supporting structure and a multi-layered film arranged on the exterior thereof, wherein the layers forming the film consist of a flexible, elastomeric and reversibly deformable polymer, and wherein the component carrier comprises devices which act on the film for a regional deformation of the film, and also devices for a regional transillumination of the film. The multi-layered film may be coated with a lacquer layer.

### Problem to be solved by the invention

Touch interfaces need to have high abrasion resistance. Since the lacquer layers used in the prior art do not sufficiently meet this requirement, the problem underlying the present invention was the provision of a composite structure that is used for touch interface applications and has high abrasion resistance. Another problem to be solved was to provide a composite structure having increased abrasion resistance while keeping other properties such as translucency, gloss and colour unaffected.

### Summary of the invention

The problem underlying the present invention was solved by providing a new composite structure coated with a finishing layer having high abrasion resistance. The present application covers the following aspects [1] to [15].
[1] A composite structure containing a finishing layer provided on a substrate layer, wherein the finishing layer is based on a cured polymer and is obtainable by a method that comprises irradiation curing a finishing lacquer that is applied on the substrate layer and contains an irradiation-curable compound to obtain the cured polymer.
   [1-1] The composite structure according to aspect [1], wherein the substrate layer has a thickness of 30 µm to 3000 µm, preferably 50 µm to 1000 µm.
   [1-2] The composite structure according to aspect [1] or [1-1], wherein the finishing layer has a thickness of 5 µm to 100 µm, preferably 5 µm to 50 µm.
   [1-3] The composite structure according to any of the preceding aspects, wherein the irradiation-curable compound contains an irradiation-curable carbon-carbon double-bond.
   [1-4] The composite structure according to any of the preceding aspects, wherein the finishing layer consists of two or more layers, preferably each containing an irradiation-curable compound. The two or more layers may have the same composition or different compositions.
   [1-5] The composite structure according to any of the preceding aspects, wherein the cured polymer is a crosslinked polyurethane.
[2] The composite structure according to any of the preceding aspects, wherein the finishing layer contains a photoinitiator.
[3] The composite structure according to any of the preceding aspects, wherein the irradiation curing is UV curing and/or excimer curing.
[4] The composite structure according to any of the preceding aspects, wherein the irradiation curing is excimer curing the surface of the finishing lacquer and then UV curing the whole finishing lacquer.
   [4-1] The composite structure according to any of the preceding aspects, wherein the finishing layer has a nanostructure on its surface.
   [4-2] The composite structure according to aspect [4-1], wherein the surface of the composite structure has grains and surface folds on the grains, wherein the depths of indentations of the grained surface structure are in the range of 10 µm to 1000 µm and the depths of indentations of the surface folds are in the range of 10 nm to 5000 nm, preferably 10 nm to 1000 nm.
   [4-3] The composite structure according to any of aspects [4] to [4-2], wherein the finishing layer contains a photoinitiator.
[5] The composite structure according to any of the preceding aspects, particularly according to aspect [4], [4-1], [4-2], or [4-3], wherein a sample of the composite structure shows only slight matting and has an unchanged overall structure after 10,000 cycles, preferably after 40,000 cycles, at 5N in an abrasion test according to DIN EN 60068-2-70.
[6] The composite structure according to any of the preceding aspects, wherein the substrate layer is a translucent layer.
   [6-1] The composite structure according to aspect [6], wherein the substrate layer, preferably the composite structure, has a light transmittance of 1 to 50 %.
   [6-2] The composite structure according to aspect [6] or [6-1], wherein the substrate layer, the finishing layer, and the composite structure are translucent.
[7] The composite structure according to any of the preceding aspects, particularly according to aspect [6], [6-1], or [6-2], containing a touch sensor under the substrate layer.
   [7-1] The composite structure according to aspect [7], containing the following structural elements under the substrate layer: opaque areas or an opaque layer having opaque areas and translucent areas; a touch sensor area or a sensor layer having a touch sensor area; optionally a light source; optionally a support layer; and optionally a soft layer.
   [7-2] The composite structure according to any of the preceding aspects, wherein the substrate layer has a light transmittance of 1 to 50 % and comprises an opaque layer containing a translucent area and a touch sensor area that is at least partly arranged in or above or below the translucent area of the opaque layer.
   [7-3] The composite structure according to aspect [7-2], wherein the opaque layer containing the translucent area is a mask layer.
   [7-4] The composite structure according to aspect [7-2] or [7-3], containing a sensor layer comprising the touch sensor area and at least electric conductors connected thereto.
   [7-5] The composite structure according to any one of aspects [7-2] to [7-4], wherein the touch sensor area contains a touch sensor fully arranged below the opaque area of layer, and a translucent area at least partially arranged below the translucent area of the opaque layer.
   [7-6] The composite structure according to any one of aspects [7-2] to [7-5], containing the substrate layer, the opaque layer containing a translucent area, optionally the sensor layer, and a support layer in this order, wherein the support layer is translucent or at least partially translucent.
   [7-7] The composite structure according to any one of aspects [7-2] to [7-7], containing a light source arranged in or attached to at least one of the layers selected from the opaque layer containing a translucent area, the translucent sensor layer, and the support layer.
   [7-8] The composite structure according to any one of aspects [7-2] to [7-7], comprising a soft layer that is contained in the substrate layer below one or more compact layers or that is arranged between the substrate layer and the opaque layer or between the opaque layer or, if present, the sensor layer and the support layer.
   [7-9] The composite structure according to any one of aspects [7-2] to [7-8], obtainable by a process comprising a step of printing an opaque mask layer on the substrate layer, and a subsequent step of printing a sensor layer on the mask layer.
   [7-10] The composite structure according to any one of the preceding aspects, wherein the finishing layer is the visible side of the composite structure, and the substrate layer is a translucent layer selected to render the other elements of the composite structure invisible in the absence of light emitted from a light source arranged in or at the rear side of the composite structure.
   [7-11] The composite structure according to aspect [7-10], wherein the translucent elements of the composite structure are selected to allow and the opaque areas of the composite structure are selected to inhibit transmittance of visible light emitted from a light source arranged in or at the rear side of the composite structure.
[8] A method of preparing a composite structure containing a substrate layer and a finishing layer containing a cured polymer provided on the substrate, comprising the following steps:
   (i) providing a substrate comprising a substrate layer as a top layer or consisting of a substrate layer;
   (ii) providing a liquid finishing lacquer containing an irradiation-curable compound;
   (iii) applying the liquid finishing lacquer on the substrate layer to obtain a finishing lacquer layer;
   (iv) irradiation curing the irradiation-curable compound of the finishing lacquer layer to prepare a cured polymer and obtain the composite structure.

   [8-1] The method according to aspect [8], wherein the finishing lacquer contains a solvent and/or water and the method comprises drying the finishing lacquer layer prior to step (iv).
   [8-2] The method according to aspect [8], wherein the finishing lacquer is an aqueous dispersion of the irradiation-curable compound.
   [8-3] The method according to any of aspects [8] to [8-2], wherein step (iii) is carried out in a roll-to-roll process.
   [8-4] The method according to any of aspects [8] to [8-3], wherein the irradiation-curable compound is a polymer such as a polyurethane containing irradiation-curable carbon-carbon double bonds.
[9] The method according to any of aspects [8] to [8-2], wherein the irradiation-curable compound of the finishing lacquer contains a polymerizable group that is not polymerizable by irradiation curing, and step (iv) comprises subjecting the finishing lacquer layer to step (iv-1) of polymerization of the polymerizable group and step (iv-2) of irradiation to crosslink the irradiation-curable compound, wherein step (iv-1) is carried out before or after or at the same time as step (iv-2).
   [9-1] The method according to aspect [9], wherein the polymerization of step (iv-1) is a reaction of a prepolymer with a chain extender, optionally using a catalyst.
[10] The method according to aspect [8] or [9], wherein the finishing lacquer contains a diisocyanate, a polyol, and a photoinitiator, wherein the diisocyanate is the irradiation-curable compound and/or the polyol is the irradiation-curable compound.
   [10-1] The method according to aspect [10], wherein the diisocyanate and/or the polyol contain(s) an irradiation-curable carbon-carbon double bond, preferably a (meth)acrylate group.
[11] The method according to any of aspects [8] to [10], wherein step (iv) comprises UV curing and/or excimer curing.
[12] The method according to any of aspects [8] to [11], wherein step (iv) comprises a step of excimer curing the surface of the composition layer and then UV curing the whole composition layer.
[13] The method according to any of aspects [8] to [12], wherein step (iv) comprises excimer curing to form nanostructures on the surface of the finishing layer.
[14] A composite structure obtainable by a method according to any one of aspects [8] to [13].
[15] The use of a composite structure according to any one of aspects [1] to [7] or [14] as a material for the interior of vehicles.

### Advantages of the invention

The finishing lacquer confers high abrasion resistance to the composite structure of the present invention. The composite structure maintains its structure and gloss after standard abrasion tests.

The composite structure having high abrasion resistance can be used for touch interface applications. A combination with seamless and hidden until lit applications is possible. The finishing layer may combine the properties of high abrasion resistance and translucency.

The composite structure can be used in the interior of vehicles and may be an artificial leather.

### Description of the drawings

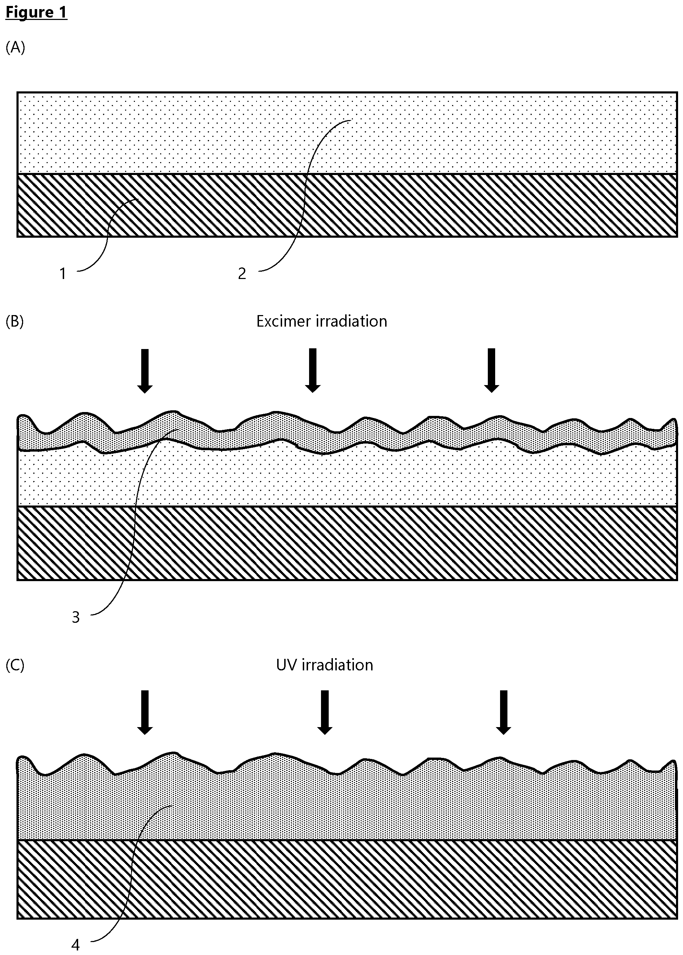

Figure 1 shows the preparation of a composite structure according to the present invention by a method according to an embodiment of the present invention. Fig. 1(A): The finishing lacquer (2) is applied to the substrate layer (1). Fig. 1(B): The finishing lacquer is exposed to excimer irradiation. The parameters of the excimer irradiation are adjusted such that only an upper portion (3) of the layer of the finishing lacquer is cured. The curing conditions such as the high velocity of curing result in the formation of a structured surface containing peaks and valleys. Fig. 1 (C): The finishing lacquer is exposed to UV irradiation to fully cure the finishing lacquer thus obtaining the finishing layer (4).

### Embodiments of the invention

The composite structure of the present invention is preferably a flexible film. The finishing layer and the substrate layer preferably have a total thickness of 30 µm to 3000 µm, more preferably 50 µm to 2000 µm.

The composite structure comprises layer structures and is a layer structure itself. The plane of the layer of the composite structure is sometimes referred to as "the layer plane" in the present invention. The composite structure may be defined by its visible side, i.e. the upper side of the finishing layer provided on the substrate layer that may have a grain. This side is also referred to as the A-side. The underside is referred to as the B-side. These designations hold for all layers of the composite structure. This means that the side facing the substrate layer is the A-side of a layer, and its rear side is the B-side of a layer. A direction within the same layer plane is referred to as horizontal direction, and a direction from a layer plane to another layer plane, in particular in the direction perpendicular to a layer plane, is referred to as vertical direction within the composite structure. The terms "above" and "below" relate to positions perpendicular to a layer plane.

The composite structure may be grained. The grain may be geometric or may be intended to imitate natural leather. The grained surface structure contains indentations and protrusions. The depth of the indentations of the grained surface structures is usually in the range of more than 10 µm to 2000µm, preferably more than 10 µm to 1000 µm. Hence, the grained surface structures are preferably microstructures. In any case, the dimensions of the grained surface structures are larger than those of the surface folds obtained by irradiation curing. The irradiation curing may result in surface folds on the finishing layer. The surface folds contain indentations and protrusions. The depth of the indentations of the surface folds is preferably in the range of 10 nm to 1000 nm. Hence, the surface folds create nanostructures. In one embodiment, nanostructured surface folds may be present on the microstructured grains of the finishing layer. In the present invention, the depth of an indentation can be determined by microscopically detecting indentations and protrusions in a cross-sectional view of a sample, measuring the hight of the peaks of two neighbouring protrusions, determining the average of the two hights, and taking the difference between said average hight and the hight of the bottom of the indentation as the depth of the indentation.

The composite structure may be translucent. Hence, the substrate layer, the finishing layer and optionally contained additional structural elements may be translucent. A "translucent" structure allows the transmittance of more visible light than an "opaque" structure, when light is emitted from the same light source and hits the structures. In the present invention, the meaning of the term "translucency" covers the meaning of "transparency". In general, transparency is the physical property of allowing light to pass through the material without being scattered. Translucency is a superset of transparency and allows light to pass through and allows scattering. In other words, a translucent medium allows the transport of light while a transparent medium not only allows the transport of light but allows for image formation. Transparent materials appear clear. Since the value of the light transmittance is affected by absorption, scattering, reflection and the like, the exact light transmittance values of the different components of the composite structure may vary depending on the type of light source, the composition and thickness of the various layers. The light transmittance also differs for different wavelength ranges.

In one embodiment, a translucent structure is defined in that a lighting system, e.g. a light source, having relatively low luminous power such as, e.g., a 0.5 watt LED allows achieving a luminance of the composite structure between 2 and 4 cd/m² (cd=candela) or even between 2 and 5 cd/m² and therefore suitable background lighting, wherein the elements arranged under the translucent layer are imperceptible as long as the lighting system is deactivated. This type of lighting is also referred to as hidden-until-lit.

The various translucent layers of the composite structure may differ in the respective light transmittance. For instance, light transmittance of the composite structure through the translucent areas in perpendicular direction from the B-side to the A-side or from the light source to the A-side, respectively, may be 1 to 50 %, preferably 1 % to 30 %, more preferably 2 to 20 % and even more preferably 5 to 10 % in the wavelength range of 400 to 700 nm.

The opposite property of translucency is opacity. The light transmittance of the opaque portions of the composite structure may be less than 1 %, preferably less than 0.1 % and preferably 0 %. The values preferably relate to the wavelength range of 400 to 700 nm. In a preferred embodiment, the term "opaque" means a light transmittance of less than 1 % in the wavelength range of 400 to 700 nm. In any case, the light transmittance of an opaque layer is lower than the light transmittance of the translucent layer. For instance, if the light transmittance of the translucent layer is at least 2 % then the light transmittance of a layer contained in the same composite structure and referred to as "opaque" is less than 2 %.

The light transmittance of the composite structure is ultimately defined by the composite of materials, wherein the light transmittance of the substrate layer may be low to achieve the desired property of hiding the other elements when the light source is deactivated, i.e. the other elements are hidden-until lit. When the light source is deactivated, the upper side of the composite structure has the appearance of a conventional structure, e.g. a conventional artificial leather. To enable the property of hiding the elements arranged under the translucent layer, the light transmittance of the substrate layer is preferably 1 to 50 %, more preferably 1 to 30 %, still more preferably 2 to 20 % or 5 to 10 % in the wavelength range of 400 to 700 nm.

The translucent elements and the light source can be adjusted to one another in such a way that a luminance of 1 to 20 cd/m², preferably 2 to 20 cd/m², and more preferably 2 to 10 cd/m² or 2 to 8 cd/m² is achieved.

The light transmittance of the layer structures described in the present application, i.e., the individual layers or any of the composite structures, respectively, is determined as follows: Equipment: Datacolor, model 850; Lamp: Xenon. The total transmittance is measured according to the user's guide provided by the manufacturer. A white plaque (e.g. Spectralon^{®} plaque) is used as an optical standard for transmission calibration and measurement. The white plaque is placed at the front aperture plate. The sample to be measured is placed against the sphere opening. The transmittance is determined within the range of 400 to 700 nm at the wavelength λₘₐₓ of the maximum transmittance peak for the sample. The light transmittance [%] of a sample is defined as 100 % x (transmittance value measured at λₘₐₓ in the presence of the layer structure)/(transmittance value measured at λₘₐₓ in the absence of the layer structure).

In some examples, graphic designs, image, pattern or the like are provided in the composite structure. The elements may collectively be referred to as graphic(s) in the present description. For example, decorative patterns or indicative patterns may be applied.

The patterns may be colored, e.g. red, to simplify the user's orientation or to draw the user's attention to the illuminated area when the light source is activated. Examples for applying the graphics are inkjet printing and screen printing.

Whenever it is mentioned in the context of this description that individual components or elements are based on or made of a certain material, this should be interpreted as the respective material forming the main constituent of the component, wherein other constituents may also be present in small quantities. In embodiments, the terms "based on" or "made of" a certain material means a content of more than 50 %, preferably 90 %, and more preferably 95 %.

In the present description, compounds, elements, and components are generally described in the singular form, e.g. "a" or "the" compound. It is emphasized that these formulations do not at all exclude the presence of more than one of the indicated compound, component, or element, unless indicated otherwise.

The terms "comprises," "comprising," "including," and "having," are inclusive and therefore specify the presence of stated features, components, layers, elements, and/or steps, but do not preclude the presence or addition of one or more other features, components, layers, elements, steps and/or groups thereof. The method steps, processes, and operations described herein are not to be construed as necessarily requiring their performance in the particular order discussed or illustrated, unless specifically identified as an order of performance. It is also to be understood that additional steps may be employed.

The term "and/or" includes any and all combinations of one or more of the associated listed items.

In the present invention, the standards and norms mentioned refer to the latest version available at the time this application was filed, unless indicated otherwise.

In the present invention, percentages (%) are percentages by mass (% by mass) unless explicitly indicated otherwise.

### The substrate layer

The substrate layer covers all other layers and elements of the composite structure of the present invention, except for the finishing layer. The substrate layer may be a single-layered or multi-layered structure and may consist of or comprise one or more compact layer and/or one or more foam layers. Preferably, the substrate layer comprises two or more layers. The layers may differ in composition, thickness, translucence, and any other property. In particular, the uppermost layer, i.e., the layer contacting the finishing layer, may be a basecoat lacquer. The basecoat lacquer is a primer providing good adhesion of the finishing layers to the substrate and providing a barrier against the migration of substances from the substrates (e.g., plasticizers in the case of PVC for example).

The substrate layer may be a single layer structure such as a film. It may consist of a film or comprise a film, for example a film consisting of or comprising TPO, polylactic acid (PLA), thermoplastic elastomers (TPE), polyamide (PA), polybutadiene (PB), polyurethane (PUR), polytetrafluoroethylene (PTFE), polyvinyl fluoride (PVF), polyvinyl chloride (PVC) or combinations thereof. Preferred materials are TPO, TPU, PUR or PVC. The film may be coated with a basecoat lacquer. In that case, the substrate layer is the basecoat lacquer or the composite structure of a film and a basecoat lacquer, respectively.

The substrate layer may be flexible and soft. In one embodiment, the translucent layer has soft haptics such as a Shore A hardness in the range from 60 to 80, for example about 70. The Shore A hardness referred to in the present invention is defined in DIN 53505.

The substrate layer is coated with the finishing layer, i.e. the uppermost layer component at the A-side of the substrate layer, and/or may have a grained surface structure to imitate natural leather. Additives may be contained in the substrate layer.

The additives contained in the substrate layer may be additives to render it resistant against UV and/or high temperature. Two types of light stabilizers may be used, i.e. Ultraviolet Light Absorbers (UVA) and Hindered-Amine Light Stabilizers (HALS). Several types of UVA are commercially available., e.g. benzotriazoles which offer the broadest spectral coverage. Triazine is also an option. HALS trap free radicals to maintain surface properties such as gloss and prevent cracking and chalking of paints. When combined, UVA and HALS provide synergistic effects and offer simplicity of formulation. In relation to the heat degradation, suitable products are e.g. benzenepropanamide, N,N'-1,6-hexanediylbis[3,5-bis(1,1-dimethylethyl)-4-hydroxy, an antioxidant and tris(2,4-di-tert.-butylphenyl)phosphite.

The substrate layer may be opaque or translucent. The light transmittance of the substrate layer may be 0 % to 100 %. The finishing layer and the substrate layer have the same or different light transmittance. For hidden-until-lit applications, the light transmittance may be 1 to 50 %, preferably 1 to 30 %, more preferably 2 to 20 % and even more preferably 5 to 10 % in the wavelength range of 400 to 700 nm.

In another embodiment, the substrate layer contains one or more soft layer(s), preferably one soft layer, and a compact layer as the uppermost layer, which is coated by the finishing layer. In particular, the substrate layer may contain a soft layer and two or three compact layers and have a grain. The soft layer is preferably a foam layer. In the present invention, a compact layer has a density of more than 0.80 g/cm³, and a foam layer has a density of less than 0.80 g/cm³.

### The finishing layer

The finishing layer is provided on the substrate layer and determines the abrasion resistance and other surface properties such as slip, anti-squeak, and surface touch. The finishing layer is obtained by irradiation curing a liquid finishing lacquer. The finishing layer may be opaque or translucent.

The finishing lacquer contains the raw material compounds to obtain the cured polymer of the finishing layer by irradiation curing. The raw material compounds include monomers, oligomers and/or prepolymers capable of forming the cured polymer. Herein, the term "oligomer" is used to refer to 2 to 5 consecutive related structural units; a molecular structure having 6 or more such structural units is referred to as a "polymer". In particular, the finishing lacquer contains an irradiation-curable compound. In particular, the compound is curable by UV or excimer irradiation. Curability by other means, e.g. by light of other wavelengths or electron beams, is not excluded.

An irradiation-curable compound may contain a radically polymerisable C=C double bond. Examples of radically polymerisable groups are non-aromatic C=C double bonds such as vinyl, allyl or norbornenyl groups. The compound may be selected from vinyl ethers, allyl ethers, propyl ethers, alkenes, diesters, unsaturated esters, allyl triazines, allyl isocyanates and N-vinyl amides. Preferred UV-curable compounds are (meth)acrylates and derivatives thereof. The expression "(meth)acrylate" means "acrylate and/or methacrylate", unless otherwise indicated. The same applies to the expressions "(meth)acrylic acid" and "(meth)acrylate ester". Examples of (meth)acrylates are 1,4-butanediol dimethacrylate (BDDMA), hexanediol dimethacrylate (HDDMA), 1,3-butylene glycol dimethacrylate (1,3-BGDMA), ethylene glycol dimethacrylate (EGDMA), dodecanediol dimethacrylate (DDDMA), trimethylolpropane trimethacrylate (TMPTMA), trimethacrylate ester (TMA ester), wherein these monomers may be used singly or in combination of two or more.

In addition to the UV-curable compound with a C=C double bond, the finishing lacquer may also contain a monomer with at least two thiol groups, for example glycol di(3-mercaptopropionate) (GDMP). The reaction of the thiol group with a carbon-carbon double bond is a thiol-ene reaction. Other examples of monomer building block with at least two thiol groups are 3-mercaptopropionate, 3-mercaptoacetates, thioglycolates and alkylthiols. The finishing lacquer may contain, for example, a monomer having at least two thiol groups in an amount of from 1 % to 50 %, in particular from 5 % to 30 %, the monomer or oligomer having at least one polymerisable double bond in an amount of from 1 % to 90 %, in particular from 10 % to 50 %.

Preferably, the irradiation-curable compound comprises at least one ester of an alcohol and an acid bearing the C=C double bond. More preferably, the UV-curable compound is an alcohol esterified with one or two or more, preferably two (meth)acrylate groups.

The irradiation-curable compound may be a prepolymer (sometimes simply referred to as "the prepolymer" herein) and may preferably contain at least one polymerizable carbon-carbon double bond. The prepolymer may be an oligomer or polymer having a weight average molecular weight Mw of at least 2000 g/mol or even more than 5000 g/mol. A lower Mw results in a lower viscosity. The prepolymer is preferably an oligomer having at least two, more preferably at least five or at least ten repeating units. The monomer units may be structurally identical or similar, or they can be different from each other. The prepolymer can be cured, i.e. polymerized, thus resulting in a cured polymer. The finishing lacquer may contain the prepolymer as the only polymerizable component and may thus contain no polymerizable components other than the prepolymer. Alternatively, the finishing lacquer may contain the prepolymer and other copolymerizable components, e.g., a chain extender, which may be monomeric. In that case, the final polymer is obtained e.g. by chain extension and by curing the polymerizable C-C double bonds. For instance, a urethane acrylate prepolymer containing terminal hydroxyl groups may be chain-extended by reacting with a diisocyanate and optionally using a reaction catalyst such as a mixture of bismuth and zinc neodecanoate. Chain extension may be carried out before curing and may be independent of curing. Preferably, chain extension and curing are carried out at the same time. The irradiation-curable compound may be a prepolymer selected from the group consisting of urethane acrylates, vinyl acrylates, epoxy acrylates, polyester acrylates, polyacrylates, polyether acrylates, polyolefin acrylates, and silicon acrylates. A urethane acrylate (UA) may be preferred, and urethane acrylate oligomers may be more preferred. Examples of urethane acrylate oligomers includes di- or higher functional acrylate esters of hydroxyl-terminated NCO extended polyesters or polyethers which can be aliphatic or aromatic.

The finishing lacquer may contain a solvent and/or water or may be free of solvents and/or water. In the present invention, the term "solvent" does not include water. In particular, the finishing lacquer may be free of aromatic solvents such as benzene, toluene, and xylene.

A solvent-free finishing lacquer usually contains reactive diluents to adjust the viscosity and the reaction velocity. For instance, the high viscosity of UA oligomers may be reduced by the addition of acrylate monomers as reactive diluents. A reactive diluent is reactive since it is polymerizable and becomes part of the molecule of the cured polymer structure, and it is a diluent since it reduces the viscosity of the composition. Preferably, the reactive diluent has at least one polymerizable double bond. The reactive diluents are polymerizable with the prepolymer to form the copolymerized elastomeric network of the cured polymeric material in the finishing layer. The reactive diluent preferably has a weight average molecular weight Mw of less than 500 g/mol and thus differs from the prepolymer having a weight average molecular weight Mw of more than 2000 g/mol. In any case, the reactive diluent differs in its structure from the prepolymer. The reactive diluent may be selected from the group consisting of aliphatic (meth)acrylates or polyether(meth)acrylates, particularly HDDA or TMP(EO)xTA. It is possible to use a multifunctional aliphatic or polyether(meth)acrylate, particularly TMP(EO)9TA, TMP(EO)6TA, TMP(EO)3TA or TMPTA is contained as a reactive diluent to specifically adjust the hardness of the polymer composition in addition to the viscosity of the finishing layer.

Reactive diluents may be toxic. If their use is to be avoided, an aqueous dispersion can be employed as the finishing lacquer. Such a finishing lacquer is improved in terms of easy adjustment of its viscosity without the need of using reactive diluents. The use of an aqueous dispersion makes it possible to easily adjust the viscosity by varying the water content of the aqueous dispersion. The viscosity of the aqueous dispersion can be adjusted by varying the content of water and/or reactive diluent. The dispersion preferably has a viscosity of 0.01 to 10 Pa·s. A viscosity within this range results in a good fluidity of the aqueous dispersion and a uniform coating of surfaces to be molded. In the present invention, the viscosity is measured at 23 °C according to DIN EN ISO 2555 (Brookfield method). The aqueous dispersions used in the present invention do not require reactive diluents. The omission of reactive diluents renders the aqueous dispersion environment-friendly and less toxic and results in a less tacky embossing lacquer. In a preferred embodiment, the finishing layer is an aqueous dispersion containing no reactive diluent. However, a reactive diluent may be contained e.g. for adjusting the viscosity. The dispersion may contain 0 to less than 2 %, preferably less than 0.1 %, more preferably 0 % of a reactive diluent. The aqueous dispersion may contain 10 to 90 % of water and 90 to 10 % of prepolymer. Preferably, the total of the content of water and the content of the prepolymer makes up 80 to 100 % of the aqueous dispersion.

The finishing layer may be an aqueous dispersion of the prepolymer having at least one polymerizable carbon-carbon double bond. In that case, the prepolymer is dispersible in an aqueous medium, preferably water. To achieve dispersibility, the prepolymer must have a certain degree of hydrophilicity and preferably contains hydrophilic residues, preferably other than acrylic acid residues, selected from acidic or ionic residues. For instance, the hydrophilic residues may be selected from the group consisting of carboxylic acid, sulfonic acid, carboxylate, and sulfonate residues, which may be converted to an anionic salt group by adding an organic or inorganic neutralizing agent.

The irradiation-curable compound may be a biomolecule or a derivative thereof. In particular, it may be an alcohol esterified with one or two or more, preferably two (meth)acrylate groups. The alcohol may be selected from the group consisting of a hydroxy group-containing biomolecule, a hydroxylated derivative of a biomolecule, a hydroxy group-containing or hydroxylated degradation product of a biomolecule, and an ester or ether of hydroxy group-containing or hydroxylated degradation products of a biomolecule. Specific examples are aliphatic hydroxy group-containing compounds esterified with two or more (meth)acrylate groups, selected from the group consisting of a C₆-C₂₄ alcohol, a C₂-C₆ alkoxy group-containing oligo- or polyether, a hydroxylated C₂-C₆ mono- or dicarboxylic acid-containing oligo- or polyester, an oligo- or polyester containing C₂-C₆ alkoxy groups and C₂-C₆ dicarboxylic acid, a hydroxylated polyurethane, in particular a non-isocyanate polyurethane (NIPU), a glycerol oligomer or polymer, an epoxidised triglyceride of C₆-C₂₄ fatty acids or an epoxidised C₆-C₂₄ fatty acid. Each of these compounds contains at least one hydroxy group and may therefore be referred to as an alcohol.

The bio-based compound may be cured by using a bio-based photoinitiator. By using biomaterials, fossil raw materials can be replaced with bio-based, sustainable and renewable raw materials, and the finishing lacquer can be made entirely from renewable raw materials.

In addition to a photoinitiator, the finishing lacquer may contain other additives such as UV stabilizers and antioxidants. Furthermore, the finishing lacquer may contain a surfactant that is a compound different from the irradiation-curable compound and the optionally contained reactive diluent and that is selected from the group consisting of alkyl-(meth)acrylates, polysiloxane (meth)acrylates, perfluoroalkyl (meth)acrylates, perfluoropolyether (meth)acrylates, alkyl vinyl ethers, polysiloxane vinyl ethers, perfluoroalkyl vinyl ethers, and perfluoropolyether vinyl ethers. In other words, the surfactant is selected from said group, while the prepolymer and the optionally contained reactive diluent are not selected from said group. The finishing layer may contain 0.1 % to 3 % of the surfactant. The content is based on a dry mass basis in the case of an aqueous dispersion. The surfactant modifies the surface properties such as the hydrophobicity, water repellence, and touch feeling.

### Irradiation curing

The finishing lacquer is obtainable by irradiation curing. Examples of irradiation curing include UV (ultraviolet) curing and excimer curing. Preferably, irradiation curing is carried out by UV curing and/or excimer curing. UV curing means UV-induced curing, and excimer curing means excimer-induced curing.

An excimer (excited dimer) is a short-lived molecule, which is formed by inducing a bond between a pair of smaller electronically excited molecules. Excimer radiation differs from UV radiation in that it has higher power spectral density of radiation and higher energy of an emitted photon and is quasimonochromatic radiation with the spectral full-width at half maximum from 2 to 15 nm. An excimer lamp is a source of UV light produced by spontaneous emission of excimer molecules. Excimer lamps are quasimonochromatic light sources operating over a wide range of wavelengths in the ultraviolet (UV: 100 to 400 nm) and vacuum ultraviolet (VUV: 10 to 200 nm) spectral regions. Excimer curing may be carried out at a short wavelength (e.g. 172 nm).

A difference between UV curing an excimer curing is that the latter is usually carried out with higher energy. UV curing may be carried out using a curing energy of 350 to 1000 mJ/cm². If excimer curing is carried out before UV curing, the curing energy of the excimer may be higher than that of the subsequent UV curing.

In excimer curing, the penetration depth of the high-energy photons is low, e.g., less than 500 nm in the case of acrylates, and only the surface layer of the coating is subject to polymerization. The concomitant volume shrinkage leads to surface folds of varying degrees. This deformed "skin" forms a structure that leads to a diffuse reflection of the light, i.e., a matting effect. The depth of the indentations of the surface folds is usually less than 10 µm, preferably less than 5 µm, more preferably up to 1000 nm, e.g., 10 nm to 1000 nm. Hence, the surface folds are preferably nanostructures. The nanostructured surface obtained by irradiation curing can be used to modify the physical properties of the surface. For instance, optical properties such as refractive properties can be modified. Also, the surface energy may be modified. Hence, properties such as water repellence can be adjusted.

The surface folds caused by excimer curing are fixed by through-curing of the subjacent uncured finishing lacquer layer by using UV light (e.g. with a conventional medium-pressure mercury lamp) or electron beams.

### The photoinitiator

The radical polymerization induced by irradiation curing may be initiated by a photoinitiator optionally contained in the finishing lacquer.

The irradiation-curable compound and the photoinitiator are structurally different from each other. They are not chemically combined and are thus present in the finishing layer as separate substances. The photoinitiator preferably does not fall under the definition of UV-curable compound and in this case does not contain an irradiation-curable compound such as a polymerisable C=C double bond.

The photoinitiator may be aromatic, which is typically a petrochemical photoinitiator, or aliphatic, which may be bio-based. Examples of photoinitiators are thioxanthones, ketosulfones, (alkyl) benzoyl phenyl phosphine oxides, 1-hydroxy alkyl phenyl ketones or 2,2-dimethoxy-1,2-diphenyl ethane-1-one. The photoinitiator may be contained in a quantity of 0.1 % to 10 %, particularly 0.5 % to 5 %.

The photoinitiator has a preferred molecular weight of less than 300 g/mol and is contained in the final finishing layer, either in modified form or preferably in unmodified form. The finishing layer may content photoinitiator degradation products or photoinitiators that have not been chemically converted. Hence, the composite structure of the present invention can be distinguished from prior art structures prepared by thermal curing.

### Touch sensor application

The composite structure of the present invention may be used as a top layer of a composite structure containing a touch sensor, according to aspects [7] to [7-11] described above. In this embodiment, the finishing layer contained in the composite structure of the present invention may be applied to the composite structure disclosed in EP 3 575 121 A1. In particular, the finishing layer corresponds to the lacquer layer (9), and the substrate layer contained in the composite structure of the present invention corresponds to the translucent layer (1) in the Figures and the description of EP 3 575 121 A1. The composite structures of EP 3 575 121 A1 meet the requirement of "seamless" and "hidden until lit". The components of the touch sensor application will be discussed in detail in the following.

Under the substrate layer, the composite structure may contain opaque areas or an opaque layer having opaque areas and translucent areas; a touch sensor area or a sensor layer having a touch sensor area; a light source; a support layer; and a soft layer.

In a preferred embodiment, the composite structure containing a touch sensor may show hidden-until-lit effect. To achieve this desired effect, the substrate layer preferably has a light transmittance of 1 to 50 %. The composite structure containing a touch sensor may be a seamless structure. To that end, the elements and/or layers under the translucent layer of the composite structure may be applied by a printing step. In a more preferred embodiment, the composite structure containing a touch sensor is a seamless structure showing hidden-until-lit effect.

The opaque layer contains a translucent area and an opaque part. The opaque areas may be discontinuous and thus do not have to be connected to each other. The opaque areas may be large opaque areas and/or relatively thin opaque graphics such as letters, symbols or frames or the like. The opaque layer may be a film, preferably made of a polymer, that is applied onto another layer. The opaque layer may be made of a compact layer or a soft layer, e.g. a foam layer or any other soft material, e.g. a textile layer. The translucent area may simply be a void area surrounded by an opaque part, i.e. an area where no opaque part is arranged, e. g. a mask. Preferably, the opaque layer is a mask printed on the B-side of the substrate layer. In one embodiment, this film may contain the touch sensor area and optionally other electric parts, e.g. those necessary for the touch sensor area to serve its function.

The touch sensor area is preferably a sensor sensitive to changes in pressure or temperature or both pressure and temperature. It is preferred that a sensor signal can be affected by the touch of a finger of a human user. The function of the touch sensor area may be that of a switch or a push button to actuate an electric device such as a lamp or a motor. The touch sensor area may be a membrane touch switch known in the art. The sensor may be a capacitive layer sensor. The sensor may be functionally connected to other electric or electronic parts and may contain elements to connect it to other electric parts. Therefore, the sensor is preferably contained in a sensor layer that comprises at least electric conductors or contacts. The touch sensor area may be a capacitive layer sensor comprising a first electrically conductive layer, a ferroelectric polymer, and a second electrically conductive layer in this order. The touch sensor area comprises or consists of a touch sensor. Since the touch sensor area may consist of a touch sensor, the two expressions may be used interchangeably in this description. The arrangement of the touch sensor area is at least partly in or above or below the translucent area of the opaque layer. Preferably, touch sensor area is in direct contact with the translucent area of the opaque layer, which means that no other layer or material is present between them.

The touch sensor area and electric conductors or contacts may be contained in a sensor layer. The sensor layer may additionally be connected to or contain elements such as resistors, capacitors, control elements and the like, which are necessary for the touch sensor area to serve its function. These additional elements may be arranged outside or at least partially within the sensor layer. The touch sensor layer may be applied by inkjet printing of screen printing onto the B-side of the translucent layer, preferably after the opaque layer has been applied to the B-side of the translucent layer. The touch sensor layer may additionally contain a light source.

A light source may serve the purpose of illuminating the translucent areas of the composite structure to indicate the location of the sensors. Thus, the light source simplifies the user's orientation or draws the user's attention to the illuminated area when the light source is activated. The light source referred to in the present invention may be a light source arranged at the B-side of the composite structure. The light source may be contained in the composite structure or adhered to the B-side of the support layer and may thus be part of the composite structure of the present invention. Alternatively, the light source may be positioned in a distance from the B-side of the composite structure. In that case, the light source is not part of the composite structure of the present invention. It is essential that the translucent areas and elements are aligned to allow the vertical light transmission through the composite structure. An example of a light source is an LED or an electroluminescence element.

A support layer may or may not be translucent, and it may be a flexible and/or soft or a rigid and/or hard material. In one embodiment, the support layer s transparent, flexible and soft. It may be made of a fabric, a textile, a spacer fabric or a foam. In particular, it may be made of a polyolefin foam, a woven spacer fabric, a translucent formed fabric or a translucent knitted fabric. The material and the thickness of the material has to be selected depending on the desired property of the layer, e.g. translucency.

A soft layer may contribute to the desired softness and haptics of the composite structure. The soft layer may be a foam or a textile. Preferably, the foam layer has a density of 0.05 to 0.5 g/cm³ or 0.1 to 0.3 g/cm³. The thickness of the foam layer is preferably 30 to 3000 µm or 500 to 2000 µm. The foam layer may be made of polyolefin, in particular polypropylene. In one embodiment, the soft layer is arranged between the substrate layer and the opaque layer. In another preferred embodiment, the soft layer is arranged at the A-side of the support layer, i.e., between the opaque layer or, if present, the sensor layer and the support layer. Depending on the position of the light source, the soft layer may be opaque or translucent.

### Manufacturing method

The present invention relates to a method of preparing a composite structure containing a finishing layer provided on a substrate layer, preferably a composite structure according to the present invention.

The method comprises the following steps:
(i) providing a substrate comprising a substrate layer as a top layer or consisting of a substrate layer;
(ii) providing a liquid finishing lacquer containing an irradiation-curable compound;
(iii) applying the liquid finishing lacquer on the substrate layer to obtain a finishing lacquer layer;
(iv) irradiation curing the irradiation-curable compound of the finishing lacquer layer to prepare a polymer and obtain the composite structure.

### Step (i)

The substrate may be a film forming the substrate layer in the composite structure to be produced. Alternatively, the substrate may contain the substrate layer as a top layer. The underlayers or structures under the translucent layer are not restricted and may be the opaque and/or sensor structures and layers disclosed above with respect to the touch sensor application. A suitable substrate material may be PVC, PUR, or TPU. In the case of TPO as the substrate material, a corona treatment (e.g., at 41-44 Nm/m²) may be carried out prior to step (ii).

### Step (ii)

The finishing lacquer contains the components necessary to form a finishing layer upon polymerization and irradiation using UV and/or excimer irradiation. For instance, the finishing lacquer contains a diisocyanate and a polyol to result in the polyurethane to be contained in the finishing layer. Furthermore, the finishing lacquer preferably contains a photoinitiator capable of initiating the crosslinking of the photopolymerizable groups such as carbon-carbon double bonds. The finishing lacquer to be applied on the substrate is adjusted in terms of its physical properties such as viscosity.

### Step (iii)

The finishing lacquer is applied to the translucent layer of the substrate to obtain a finishing lacquer layer on the translucent layer. The application of the liquid finishing lacquer may be carried out by using a roller coater or curtain coater. The obtained finishing lacquer layer is liquid and may be increased in its viscosity by removing at least parts of the solvent and/or water. To that end, the finishing lacquer layer may be gelled by heating the finishing lacquer or by using e.g. a gallium/ozone-free LED system. The finishing lacquer may be applied two or more times.

### Step (iv)

Step (iv) comprises a curing step carried out by irradiation curing. In addition, step (iv) may comprise a polymerization step of polymerizing monomers or chain extending prepolymers or oligomers, wherein said polymerization step may be carried out by irradiation curing or otherwise. Preferably, the polymerization step involves polymerizable groups that are not polymerizable by irradiation curing, hence not radically polymerizable. For instance, they can be polymerized by addition or condensation polymerization. In that case, step (iv) may comprise subjecting the finishing lacquer layer to step (iv-1) of polymerization of the polymerizable group and step (iv-2) of irradiation to crosslink the irradiation-curable compound. Steps (iv-1) and (iv-2) may be carried out simultaneously or successively, i.e., in the order of (iv-1) and (iv-2) or (iv-2) and (iv-1).

An example of step (iv-1) is the polymerization of a diisocyanate and a polyol to obtain a polyurethane. The polymerization may be carried out by known methods. For instance, the finishing lacquer layer may contain a catalyst that is activated at elevated temperatures, and polymerization may be initiated by increasing the temperature.

Step (iv-2) of irradiation to crosslink the photopolymerizable groups uses the photoinitiator to initiate polymerization. This step results in an intermolecular crosslinking of the polyurethane or its raw materials and may be carried out by UV curing and/or excimer curing. In a preferred embodiment, step (iv-2) comprises a step of excimer curing the surface of the composition layer and then UV curing the whole composition layer.

The groups capable of being reacted in steps (iv-1) and (iv-2) may be contained in the same compound or in different compounds of the finishing lacquer. For instance, the diisocyanate and/or the polyol may contain an irradiation-curable group such as an acrylate.

In one embodiment, the preparation of the composite structure may comprise applying a basecoat lacquer (e.g., 8 to 16 g/m²) on the substrate layer, drying with UV lamp, applying a finishing lacquer 1, applying a finishing lacquer 2 (last layer), wherein the total thickness of the applied finishing lacquers may be 8 to 24 g/m², excimer curing with total curing energy of 1000 mJ/cm², and drying with UV lamp. These steps may be applied in the case of PVC, PUR, or TPU as the substrate layer material. In the case of TPO as the substrate layer material, a corona treatment (41-44 Nm/m²) of the substrate layer may be carried out before the application of the basecoat lacquer.

### Examples

The abrasion tests were carried out using a device and applying test procedure according to DIN EN 60068-2-70.

The following evaluation scheme was applied:

| Rating | Condition of the sample |
|---|---|
| 9-10 | No change |
| 8 | Minimum matting; minimum abrasion of grain knolls or finishing layer |
| 7 | Slight matting; slight abrasion of grain knolls or finishing layer; structure still unchanged |
| 6 | Clear matting; clear abrasion of grain knolls or finishing layer; structure slightly changed |
| 5 | Significant matting; traces of abrasion of translucent layer are clearly perceptible; structure barely perceptible anymore |
| 4 | Significant matting; complete abrasion of grain knolls an finishing layer; structure barely perceptible anymore; destruction of surface |

Samples evaluated with a rating of 7, 8, 9, or 10 are acceptable and are referred to as samples "showing only slight matting and having an unchanged overall structure".

About 10 g/m² of a basecoat lacquer were applied on the substrate film and dried. Then, about 15 g/m² of following finishing lacquers were applied:
(A) Finishing lacquer for UV/excimer-curing
   Two-component polyurethane lacquer containing:
   - Isocyanate: Undiluted isocyanate-bearing urethane acrylates
   - Polyol: OH-functional acrylic acrylates, solvent-based.
   - Flow modifier: Acrylic based, silicone-free.
   - Polyurethane catalyst: mixture of bismuth and zinc neodecanoate.
   - Matting agent: Silicon based.
   - Photoinitiator: Alpha cleavage based on a ketone.
   - Solvent: Butyl acetate.
(B) Finishing lacquer for thermal curing
   - Polyurethane: solvent borne aliphatic, polycarbonate-based
   - Crosslinker: Aliphatic polyisocyanate for solvent borne system
   - Solvent: Methoxypropyl acetate
   - Silicone: Silicone with alcohols (10 to 14%) and octamethyl cyclotetrasiloxane (0.2 to 1.0 %)
(C) Finishing lacquer for thermal curing
   The same as (B) but without silicone

The results of the Examples and Comparative Examples are shown in Tables 1 and 2.

**Table 1**

| | Substrate | Finishing layer | Curing | | |
|---|---|---|---|---|---|
| | | | Thermal | UV at 1000 mJ/cm² | Excimer/ UV at 1000 mJ/cm² |
| Example 1 | TPO | (A) | - | x | - |
| Example 2 | TPO | (A) | - | x | x |
| Comparative Example 1 | TPO | - | - | - | - |
| Comparative Example 2 | TPO | (B) | x | - | - |
| Comparative Example 3 | TPO | (C) | x | - | - |

**Table 2**

| | Abrasion resistance | | | | | Gloss | | |
|---|---|---|---|---|---|---|---|---|
| | 1 N (20k cycles) | 5 N (10k cycles) | 5 N (40k cycles) | 10 N (5k cycles) | 10 N (13k cycles) | 20° | 60° | 85° |
| Example 1 | 8 | 8 | 4 | 7 | 6 | 13.1 | 42.4 | 83.7 |
| Example 2 | 8 | 8 | 7 | 7 | 7 | 0.2 | 1.8 | 23.3 |
| Comparative Example 1 | 5 | 4 | - | - | - | - | - | - |
| Comparative Example 2 | 7 | 4 | - | - | - | - | - | - |
| Comparative Example 3 | 7 | 6 | 4 | - | - | - | - | - |

In automotive interiors, the gloss is measured at 60°, and a value of less than 2.0 is acceptable depending on the grain. The sample of Example 2 meets this requirement.

Additional experiments were carried out using the above-described samples and additional sample having TPU as the substrate film. These experiments showed that the type of substrate film has no influence on the obtained results.

The additional experiments also showed that all examples using UV curing are advantageous over thermal curing in terms of the physical properties of "cracks when bent" and "whiteness". The samples of the examples using UV/excimer curing showed the best results.

### Reference numerals

(1) Substrate layer
(2) Finishing lacquer
(3) Cured portion of the finishing lacquer
(4) Completely cured finishing lacquer (corresponding to finishing layer)

## Claims

1. A composite structure containing a finishing layer provided on a substrate layer, wherein the finishing layer is based on a cured polymer and is obtainable by a method that comprises irradiation curing a finishing lacquer that is applied on the substrate layer and contains an irradiation-curable compound to obtain the cured polymer.

2. The composite structure according to claim 1, wherein the finishing layer contains a photoinitiator.

3. The composite structure according to claim 1 or 2, wherein the irradiation curing is UV curing and/or excimer curing.

4. The composite structure according to any of the preceding claims, wherein the irradiation curing is excimer curing the surface finishing lacquer and then UV curing the whole finishing lacquer.

5. The composite structure according to any of the preceding claims, wherein a sample of the composite structure shows only slight matting and has an unchanged overall structure after 40000 cycles at 5N in an abrasion test according to DIN EN 60068-2-70.

6. The composite structure according to any of the preceding claims, wherein the substrate layer is a translucent layer.

7. The composite structure according to any of the preceding claims, containing a touch sensor under the substrate layer.

8. A method of preparing a composite structure containing a finishing layer provided on a substrate layer, comprising the following steps:
(i) providing a substrate comprising a substrate layer as a top layer or consisting of a substrate layer;
(ii) providing a liquid finishing lacquer containing an irradiation-curable compound;
(iii) applying the liquid finishing lacquer on the substrate layer to obtain a finishing lacquer layer;
(iv) irradiation curing the irradiation-curable compound of the finishing lacquer layer to prepare a polymer and obtain the composite structure.

9. The method according to claim 8, wherein the irradiation-curable compound of the finishing lacquer contains a polymerizable group that is not polymerizable by irradiation curing, and step (iv) comprises subjecting the finishing lacquer layer to step (iv-1) of polymerization of the polymerizable group and step (iv-2) of irradiation to crosslink the irradiation-curable compound.

10. The method according to claim 8 or 9, wherein the finishing lacquer contains an isocyanate, a polyol, and a photoinitiator, wherein the diisocyanate is the irradiation-curable compound and/or the polyol is the irradiation-curable compound.

11. The method according to any of claims 8 to 10, wherein step (iv) comprises UV curing and/or excimer curing.

12. The method according to any of claims 8 to 11, wherein step (iv) comprises a step of excimer curing the surface of the composition layer and then UV curing the whole composition layer.

13. The method according to any of claims 8 to 12, wherein step (iv) comprises excimer curing to form nanostructures on the surface of the finishing layer.

14. A composite structure obtainable by a method according to any one of claims 8 to 13.

15. The use of a composite structure according to any one of claims 1 to 7 as a material for the interior of vehicles.
